(19) **Europäisches Patentamt**
**European Patent Office**
**Office européen des brevets**

(11) **EP 4 300 184 A1**

(12) # EUROPEAN PATENT APPLICATION

(43) Date of publication:
**03.01.2024 Bulletin 2024/01**

(21) Application number: **22182212.5**

(22) Date of filing: **30.06.2022**

(51) International Patent Classification (IPC):
***G02F 1/35*** *(2006.01)*

(52) Cooperative Patent Classification (CPC):
**G02F 1/353; G02F 1/3521; G02F 1/3548**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Vilnius University**
**01513 Vilnius (LT)**

(72) Inventors:
• **Tomasiunas, Roland**
**LT-08402 Vilnius (LT)**

• **Petruskevicius, Raimondas**
**LT-06207 Vilnius (LT)**
• **Bikbajevas, Vitalijus**
**LT-04223 Vilnius (LT)**
• **Kezys, Darius**
**LT-26121 Elektrenai (LT)**
• **Kadys, Arunas**
**LT-12127 Vilnius (LT)**

(74) Representative: **Klimaitiene, Otilija**
**AAA Law**
**A. Gostauto 40B**
**03163 Vilnius (LT)**

(54) ## OPTICAL FREQUENCY CONVERTER BASED ON III-N SEMICONDUCTORS

(57)    The present invention discloses a non-linear optical device for effective optical frequency conversion. The device action is based on polarity inverted waveguides and coupling compensated quasi-phase-matching (PIC-QPM). The device represents a directional coupler formed by two strongly coupled planar GaN waveguides, placed adjacent to each other, with a thin layer in-between them. The medium of the waveguides comprises polarity inversion. After the pump optical wave injection, symmetric, or antisymmetric supermodes, or both of them with modified propagation constants are excited in the directional coupler, resulting in the generation of second harmonic optical supermodes. The planar polarity inversion of the waveguide medium has been demonstrated to have a major contribution to the enhancement of the spatial overlap integral of the fields of the pump and the generated second harmonic supermodes resulting in a remarkable improvement of the generation effectivity. The device makes also possible the generation of the higher number supermodes of the second harmonic ($TM_1^{2\omega}$, $TM_2^{2\omega}$, etc).

Fig. 1

**Description**

FIELD OF INVENTION

The present invention relates to the field of non-linear optical devices, specifically, optical frequency converters. It discloses an efficient optical frequency converter based on a directional coupler formed by two waveguides placed adjacent to each other, with both waveguides comprising III-N semiconductor layers with polarity inversion.

BACKGROUND ART

The optical frequency conversion represents a process of converting light of one frequency to the light of another frequency. The generation of new frequency components is of extreme practical importance because, although there have been an extraordinarily large number of various lasers, each type of them typically generates one or a few optical frequencies, and only a few lasers have proved practical and commercial value. The need to achieve new wavelengths and to develop practical tunable coherent light sources has led to the exploration of nonlinear optics. The essential goal of practical nonlinear optical frequency conversion is the efficient generation of radiation. The nonlinear response of the active medium is quite weak, so efficient light frequency generation requires devices many light wavelengths long. The difference in the phase velocities of the interacting waves of different frequencies in the nonlinear medium results in a phase difference that accumulates along the length of the device and significantly limits the efficiency of the mixing process. Therefore, the efficient frequency conversion requires a phase-matching condition to compensate for the difference in the material dispersion for light with different wavelengths. Several phase-matching techniques have been proposed so far.

The phase-matching conditions can be satisfied if the effective refractive indices of the pump and second harmonic (SH) generated waves are equal in values. For the same modes of both waves it is impossible, but can be fulfilled for different modes of the pump and SH. Such phase-matching (PM) is called Modal Phase Matching (MPM). The fields overlap between SH and pump waves has great importance for SH intensity.

Another technique for phase matching called Quasi-Phase-Matching (QPM) consists of periodical changing of the phase of the pump wave that leads to positive interference of the SH generated from different spots along the way of radiation propagation. This is possible by creating a periodic structure in the nonlinear medium simply by a reversal in the sign of the nonlinear susceptibility through domain inversion. Furthermore, another way of QPM, known as coupling-compensated QPM (C-QPM), realization involves the use of a directional coupler formed by two coupled planar waveguides. The pump light oscillates between two waveguides and generates SH in both of them in such a way that SH in all spots of each waveguide constructively interferes and intensifies along the direction of travel.

In recent years, a considerable amount of research has been focused on III-N semiconductors as a novel material for nonlinear optics and photonics. A unique combination of a direct bandgap, a large transparency window, and a high second-order nonlinearity makes them an interesting candidate for nonlinear optics. The wurtzite crystal structure of III-nitride possesses two distinct polar faces in the c-direction: N-and metal-polar. Both polar faces on a single substrate can be applied for the optical frequency conversion device.

The preferred semiconductor materials for implementing the device are Gallium Nitride (GaN) and Gallium Aluminum Nitride (AlGaN). GaN is a wide band semiconductor having broad transparency and high thermal conductivity, exceptional hardness, and chemical stability making it an interesting candidate for high power optical devices. Its strong polarizability and lack of inversion symmetry suit well for nonlinear frequency conversion [1]. GaN crystal has a wurtzite structure and is uniaxial birefringent with the optical axis along the c-axis. Along the c-axis, GaN possesses strong internal fields and exhibits polar behavior. However, the birefringence of GaN is not sufficient to sustain an efficient SH generation. Therefore, usually, the QPM or the MPM is required to exploit its nonlinearity.

The patent application WO2005083505A1 describes the invention of an apparatus for light frequency conversion. It consists of two parallel waveguides. The second waveguide is spatially coupled to the first one. The pump beam is injected into the first waveguide. The coupling between the two waveguides causes the light with the initial wavelength to oscillate between the two waveguides and generate the light with another wavelength in both of them. The process of oscillation leads to a phase change of the light with the initial wavelength that is responsible for phase matching between the initial and generated light. Therefore, newly generated light constructively interferes with previously generated one and intensifies along the direction of travel.

Another device for optical frequency conversion is presented in the Japanese patent application JP2019073402A. It represents a waveguide with two or more III-N layers parallel to the substrate each of opposite polarity. Such waveguide structure allows for improving MPM of the light with the initial wavelength and the light with generated higher harmonics by enhanced modal overlap due to a planar polarity inversion. The polarity inversion of III-N layers is achieved by direct layers bonding after which the resulting sample consists of two III-N layers with opposite polarities.

It is possible to deposit an III-N layer on the substrate the part of which occupies a space with a thin inversion layer, e. g., $Al_2O_3$. Then depositing of the III-N epitaxial layer simultaneously produces N-polar material on the inversion layer and III-polar material on the exposed portions of the substrate that makes possible to grows periodically oriented III-N structures (PO-III-N). The method for vertical and lateral control of III-N polarity and the process of producing III-N layers with polarity inversion is disclosed in US patent application US20120068189 (patent US9396941B2).

One of the relevant sources to this invention is [2], where SH generation in GaN waveguide with planar polarity inversion using MPM is presented.

The second source [3] describes the condition for frequency conversion in waveguide directional couplers and an example of its design.

The third relevant source [4] covers QPM in coupled parallel waveguides for second and third-order frequency conversion.

These three inventions and research sources disclose different SH conversion solutions, which in the context of the present invention, however, provide less efficient SH generation, converting it from the pump wave source.

## SUMMARY OF INVENTION

The present invention discloses a non-linear optical device for effective optical frequency conversion. The device represents a waveguide directional coupler formed by two planar waveguides placed adjacent to each other, with both waveguides comprising III-N semiconductor layers with polarity inversion. The input of the pump optical wave with frequency $\omega$ in one or both of the waveguides excites symmetric, or antisymmetric supermodes, or both of them with frequency $\omega$ with different propagation constants and generates optical supermodes with SH frequency $2\omega$ in the directional coupler. The modified propagation constants of the pump supermodes with frequency $\omega$ and generated supermodes with frequency $2\omega$ lead to phase matching between them and result in the constructive growth of the signals with propagation length. The said planar polarity inversion of the waveguides medium contributes largely to the spatial overlap of the fields of input supermode with frequency $\omega$ and generated supermode with frequency $2\omega$ that results in marked improvement of the wave with frequency $2\omega$ generation effectivity. A preferred embodiment of such a converter is a directional coupler comprising two parallel planar GaN waveguides with a thin AlGaN or $Al_2O_3$ layer between them. Furthermore, both of said two waveguides comprises polarity inversion by at least two GaN layers, thereby allowing a significant improvement of the overlap of the pump and generated SH waves. In addition, said directional coupler is symmetric following the symmetric distribution of refractive indices of the directional coupler material. Moreover, for an even better overlap of the fundamental and SH waves, the waveguide can consist of three, four, and more layers of opposite polarity depending on the SH supermode order.

## DESCRIPTION OF DRAWINGS

To understand the specific characteristics of the invention and appreciate its practical applications, the following pictures and graphs are provided and referenced hereafter. Figures are given as examples and should not limit the scope of the invention.

**Fig. 1** GaN/AlGaN strongly coupled dual-planar symmetric waveguide structure used for SH generation modelling applying C-QPM method.

**Fig. 2** Phase matching conditions for SH generation in coupled waveguides.

**Fig. 3** Simulated contour plot of pump (a) and SH (b) intensity after WG excitation. The pump and SH wavelengths are equal to 1308 nm and 654 nm, respectively, $\left( \chi_{33}^{(2)} \equiv 0 \right)$.

**Fig. 4** The dispersion curves of pump $TM_0^\omega$ and SH $TM_1^{2\omega}$ modes and their supermodes. The resonances points for various PM conditions are marked:(I) - 1510 nm, (II) - 1448.5 nm, (III) - 1308 nm, (IV) - 1749 nm, (V)- 1884.1 nm.

**Fig. 5** Schematic of supermode excitation. **a)** - pump beams with the same phases are injected into both waveguides. Symmetric supermodes are generated (s supermode excitation); **b)** - pump beam is injected into one of the waveguides. Symmetric and antisymmetric supermodes are generated (WG mode excitation); **c)** - pump beams with opposites phases are injected into both of the waveguides. Antisymmetric supermodes are generated (as supermode excitation).

Fig. 6    Symmetric directional GaN coupler for pump wavelengths 1308 (11) (a), 1448.5 (11) (b), 1510 (11) (c), and 1749 nm (I1a) (d) applying supermodes excitation. See Table 2.

Fig. 7    Symmetric directional GaN coupler for pump wavelengths 1749 nm (11) (a), 1308, 1448.5, 1510, and 1749 nm (12) (b), and 1308, 1448.5, 1510 and 1749 nm (NI) (c) applying WG mode excitation. See Table 2.

Fig. 8    Simulated contour plot of pump (a) and SH (b) intensity after WG excitation with wavelength 1510 nm. (I) type of PM conditions.

Fig. 9    Simulated contour plot of pump (a) and SH (b) intensity after symmetric supermode excitation with wavelength 1510 nm. (I) type of PM conditions.

Fig. 10    Single GaN waveguide without (NI1) (a) and with (10) (b) polarity inversion for pump wavelength 2410 nm. See Table 2.

## DETAILED DESCRIPTION OF THE INVENTION

A method and device for SH generation in coupled symmetrical waveguides made of GaN and AlGaN layers are disclosed. It is based on polarity inverted and coupling compensated QPM (PIC-QPM) in waveguides. The method and device make possible compensating phase difference between fundamental and SH waves and has an advantage over the QPM method derived from the waveguide composed of periodically oriented (PO) GaN structures for spatial periodic modulation of the nonlinear optical coefficient. The method is realized by using a dual-planar waveguide as a frequency doubler. Both of the waveguides comprise GaN semiconductor layers with polarity inversion that result in significant improvement of the overlap integral of the pump and generated SH waves.

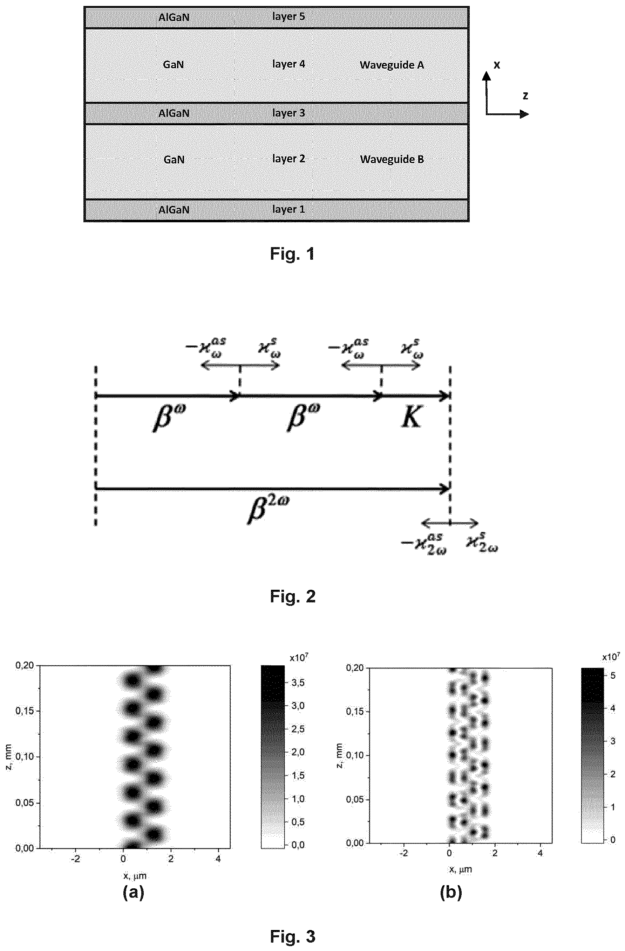

**Device structure.** A 2D dual-planar waveguide structure comprises two GaN waveguides separated by an AlGaN layer is shown in Fig. 1. The strongly coupled waveguide structure may have both symmetric or asymmetric refraction index distribution. Hereafter, to simplify the theoretical study, the geometry of the dual-waveguide structure is taken to be symmetrical. This waveguide structure can be grown by MOCVD on sapphire or other substrates [5, 6].

**Coupling compensated quasi-phase-matching (C-QPM).** Because of the directional coupling of two closely spaced GaN waveguides (Fig. 1), some guided modes with coinciding propagation constants will be generated. A strong coupling between them will lead to the formation of pair supermodes (symmetric and antisymmetric) at pump and SH wave frequencies.

$$E_i(x, z, i\omega) = \sum_{s,as} A_i^{s,as}(z, i\omega)\varphi_i^{s,as}(x) \exp\left(-j\beta_{s,as}^{i\omega}z\right) \qquad (1)$$

with supermodes propagation constants (wavenumbers):

$$\beta_s^{i\omega} = \beta^{i\omega} + \varkappa_{i\omega}^s, \qquad (2)$$

$$\beta_{as}^{i\omega} = \beta^{i\omega} - \varkappa_{i\omega}^{as}, \qquad (3)$$

where *i=1,2* for pump wave with frequency $\omega$ and SH wave with frequency $2\omega$, respectively, the symmetric and antisymmetric supermodes are labelled s and as, respectively, $\varphi_i^{s,as}(x)$ - transverse normalized supermode fields, $A_i^{s,as}(z, i\omega)$ - slowly varying amplitudes of supermodes, $\beta^{i\omega}$ - propagation constants (wavenumbers) of guided modes in uncoupled GaN waveguides, $z$ - wave propagation direction, $x$-transverse direction. The $\varkappa_{i\omega}^s$ and $\varkappa_{i\omega}^{as}$ are coupling constants representing the shifts of dispersion curves for the symmetric and antisymmetric supermode, respectively, which are defined by coupling integrals between waveguides for pump and SH waves. For the symmetric supermode, this shift is positive, and for the antisymmetric supermode - negative. For symmetric geometry (Fig. 1), these shifts are equal:

$$\varkappa_{i\omega}^s = \varkappa_{i\omega}^{as} = \varkappa_{i\omega}. \qquad (4)$$

The propagation constants of supermodes can be expressed through the effective refractive indices $N_{i\omega}^{s,as}$ of

symmetric and antisymmetric supermodes for pump and SH waves, respectively, as

$$\beta_{S,as}^{i\omega} = \frac{2\pi}{\lambda_{i\omega}} N_{i\omega}^{S,as}. \qquad \qquad (5)$$

Under light injection into one of the waveguides, the two supermodes, symmetric and antisymmetric, are excited simultaneously. Since the propagation constants of the modes are different, they propagate at different speeds, giving rise to a beat phenomenon: the optical power transfers periodically between the two waveguides with the coherence coupling length defined by the expression:

$$L_c = \frac{\pi}{\beta_s - \beta_{as}} \qquad \qquad (6)$$

After propagation of this distance, $L_c$, light wave is fully transferred from one waveguide to another.
To achieve the efficient generation of the SH the total energy and momentum of the process need to be simultaneously conserved. The energy conservation condition, i.e. the equality of the SH photon energy to a double energy of the fundamental photon, is usually automatically fulfilled in the waveguide structure. The momentum conservation condition in the strongly coupled two waveguides (Fig. 1) can be realized in consequence of the splitting of the fundamental effective refractive indices into symmetric and antisymmetric ones that makes it possible to compensate the frequency dispersion of the medium and to ensure phase matching in nonlinear interaction between the fundamental and SH waves. This phase matching condition for momentum conservation in the process of SH generation is described as follows:

$$\beta_{S,as}^{\omega} + \beta_{S,as}^{\omega} = \beta_{S,as}^{2\omega} \qquad \qquad (7)$$

Inserting Eqs. (2) and (3) into Eq. (7), an expression for phase matching condition can be obtained:

$$\beta^{2\omega} - 2\beta^{\omega} = \pm 2\varkappa_{\omega}^{S,as} \mp \varkappa_{2\omega}^{S,as} = K \qquad \qquad (8)$$

where K is an additional momentum created by strong coupling induced shifts of propagation constants of supermodes, which can be used to compensate for phase mismatching between the pump and SH waves. The construction of this momentum conservation scheme is displayed in Fig. 2.
In this case the pump optical power transfers periodically between the two waveguides and its intensity in each waveguide is modulated periodically with spatial period $\Lambda = 2\pi/K$ [3]. The SH generation process in closed waveguides resembles such in the PO-GaN structure. After propagation of coherence length $L_{coh} = \Lambda 2$, the phases of the pump and SH waves are reset and efficient generation of the SH is insured. These C-QPM conditions are consistent with QPM conditions for polar grating structure as PO-GaN.
In [3] and [4,7-9], the SH generation phenomenon was investigated in the frame of coupled-mode theory. The results were interpreted by QPM [7], resonance between the coupling coefficients of directional couplers and the PM [3,8], by coupling-length PM [4], and by C-QPM [9]. These explanations are certainly equivalent.
Inserting Eq. (5) into Eq. (7), these C-QPM conditions can be written for supermodes effective indices [10] as:

$$N_{\omega}^{S,as} + N_{\omega}^{S,as} = 2N_{2\omega}^{S,as} \qquad \qquad (9)$$

All PM conditions for C-QPM are summarized in Table 1.

Table. 1. C-QPM conditions for SH generation in coupled waveguides.

| PM condition | Condition for wavenumbers | Condition for supermode effective indices |
|---|---|---|
| (I) | $\beta^{2\omega} - 2\beta^{\omega} = 2\varkappa_{\omega}^{S} - \varkappa_{2\omega}^{S}$ | $N_{\omega}^{S} = N_{2\omega}^{S}$ |

(continued)

| PM condition | Condition for wavenumbers | Condition for supermode effective indices |
|---|---|---|
| (II) | $\beta^{2\omega} - 2\beta^{\omega} = \varkappa_{2\omega}^{as}$ | $N_{\omega}^{s} + N_{\omega}^{as} = 2N_{2\omega}^{as}$ |
| (III) | $\beta^{2\omega} - 2\beta^{\omega} = 2\varkappa_{\omega}^{s} + \varkappa_{2\omega}^{as}$ | $N_{\omega}^{s} = N_{2\omega}^{as}$ |
| (IV) | $\beta^{2\omega} - 2\beta^{\omega} = -2\varkappa_{\omega}^{as} + \varkappa_{2\omega}^{as}$ | $N_{\omega}^{as} = N_{2\omega}^{as}$ |
| (V) | $\beta^{2\omega} - 2\beta^{\omega} = -\varkappa_{2\omega}^{s}$ | $N_{\omega}^{s} + N_{\omega}^{as} = 2N_{2\omega}^{s}$ |
| (VI) | $\beta^{2\omega} - 2\beta^{\omega} = -2\varkappa_{\omega}^{as} - \varkappa_{2\omega}^{s}$ | $N_{\omega}^{as} = N_{2\omega}^{s}$ |

In special case when

$$\varkappa_{\omega} = \varkappa_{2\omega} \qquad (10)$$

double resonance leads to simultaneous excitation of symmetric and antisymmetric SH supermodes and the light beating arise not only for pump but also for SH waves.

**Polarity inverted and coupling compensated QPM (PIC-QPM).** The main drawback of modal PM (MPM) as well as C-QPM is poor fundamental and higher-order modes overlapping which leads to the reduction of SH conversion efficiencies [2]. The normalized overlap integral $I_{OVL}$ is defined as

$$I_{OVL} = {I_1}/{I_2}, \qquad (11)$$

where

$$I_1 = \left| \int_{-\infty}^{+\infty} d_{33}^{[Norm]}(x) E_{\omega}^2(x) E_{2\omega}(x) dx \right|^2 ; \qquad (12)$$

$$I_2 = \left[ \int_{-\infty}^{+\infty} |E_{\omega}^2(x)|^2 dx \right]^2 \cdot \int_{-\infty}^{+\infty} |E_{2\omega}(x)|^2 dx, \qquad (13)$$

and $d_{33}^{[Norm]}(x) = d_{33}(x)/d_{33}^{max}$ is the distribution of normalized effective nonlinear coefficient of GaN waveguide structure, which is related to maximal second-order nonlinear susceptibility of GaN $d_{33}^{max} = \chi_{33}^{(2)}/2$ for interacting modes with TM polarization.

The conversion efficiency of SH generation is defined as

$$\eta = \frac{P^{2\omega}}{P^{\omega}} * 100\% = C_2 L^2 P^{\omega} I_{OVL} * 100\%, \qquad (14)$$

where L is the waveguide length, $C_2$ - the coupling constant, $P^{\omega}$ - the pump wave power, $P^{2\omega}$ - the SH wave power.

In the following, we will use normalized conversion efficiency $\eta_2$ [%/Wcm²]:

$$\eta_2 = \frac{\eta}{P^\omega(L)^2}. \qquad\qquad (15)$$

The problem of small overlap integral also exists under excitation of higher-order SH modes using C-QPM because C-QPM can be regarded as MPM between the supermodes. The problem can be resolved by introducing polarity inversion in waveguides planar GaN layers (PIC-QPM).

The values of overlap integral (Eq. (12)) and normalized conversion efficiency (Eq. (15)) for $TM_1^{2\omega}$ mode are presented in Table 2.

**PIC-QPM for excitation of $TM_1^{2\omega}$ mode.** The simulations of waveguide structure for such SH mode generation were performed by application a 2D mode solver based on the Transfer Matrix Method (TMM) and 2D Beam Propagation Method based on Fourier split-step and 4th order Runge-Kutta algorithms [11,12]. The geometry of the symmetric coupler was chosen with the aim to realize a strong coupling regime for pump and SH waves that allows us to observe the excitation of $TM_0^\omega$ and $TM_1^{2\omega}$ supermodes in linear waveguides. The contour plot of light intensity for the pump and SH waves is presented in Fig. 3.

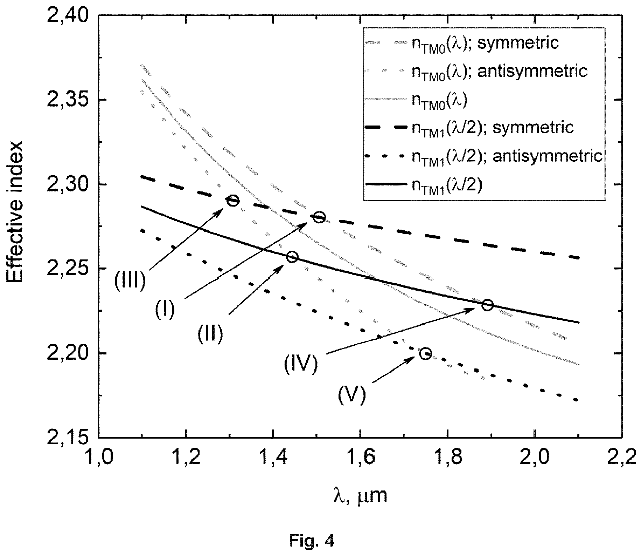

The dispersion curves simulated results for the SH $TM_1^{2\omega}$ mode in the GaN/AlGaN symmetric waveguide structure (Fig. 1) are presented in Fig. 4. For simplicity, only the first four PM conditions (I)-(IV) (Table 1) are shown. For each of the conditions, we performed the modeling for both waveguide excitation methods: the waveguide mode (WG) and the supermode (see Table 2), the latter case involves either the symmetric and antisymmetric supermode excitation.

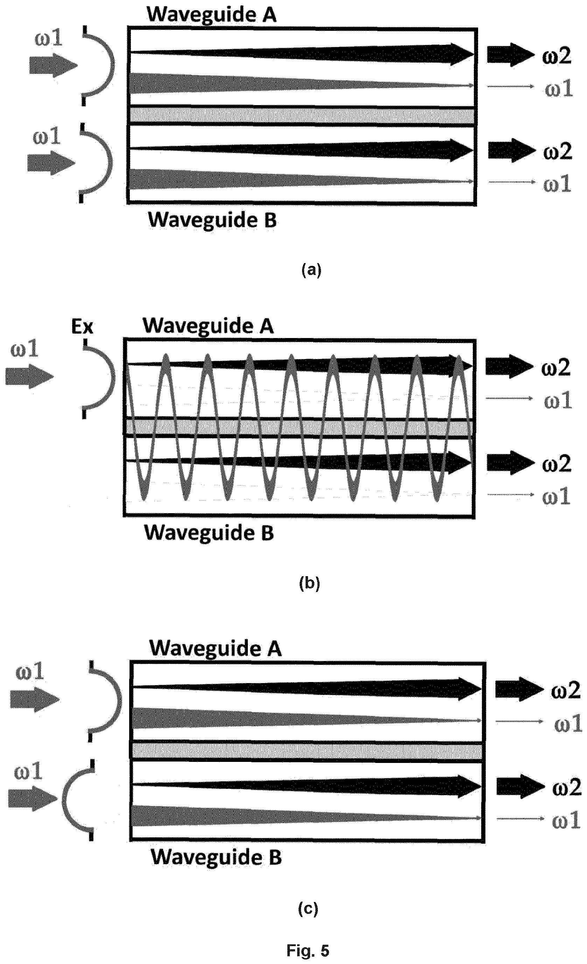

The beams propagation in the waveguides for the excitation by pump wave of the symmetric supermode, WG mode, and antisymmetric supermode is presented in Figs. 5a, 5b, and 5c, respectively. In the case of the WG mode, only one of the waveguides is excited by the $TM_0^\omega$ pump mode, whereas in the case of the supermodes both waveguides are simultaneously excited by the $TM_0^\omega$ pump with the same or opposite phases. Because two pump photons participate in the generation of one SH photon (Fig. 2), the polarisation of the pump wave can be mixed. Therefore, both the $TM_0^\omega$ and $TE_0^\omega$ modes (WG modes and supermodes) simultaneously can be used for the excitation.

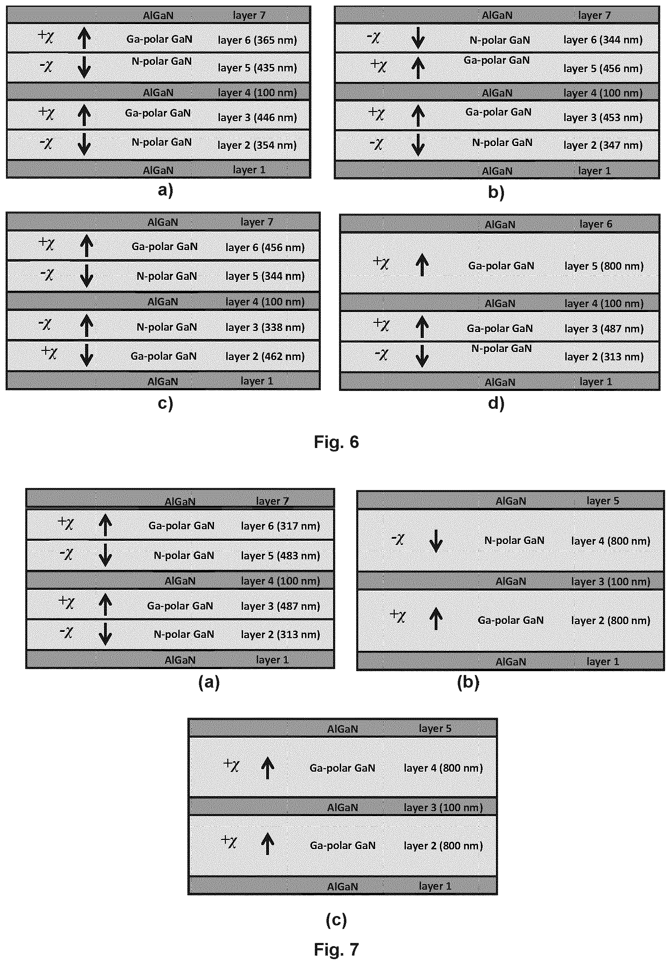

For the fulfilment of the different PM conditions for various pump wavelengths, and taking into account set of the polarity sequences chosen for comparison, a little change of the thicknesses of the polarity inverted layers was required (see Figs. 6 and 7). In all cases, however, the entire thickness of the waveguide was kept fixed and equal to 800 nm.

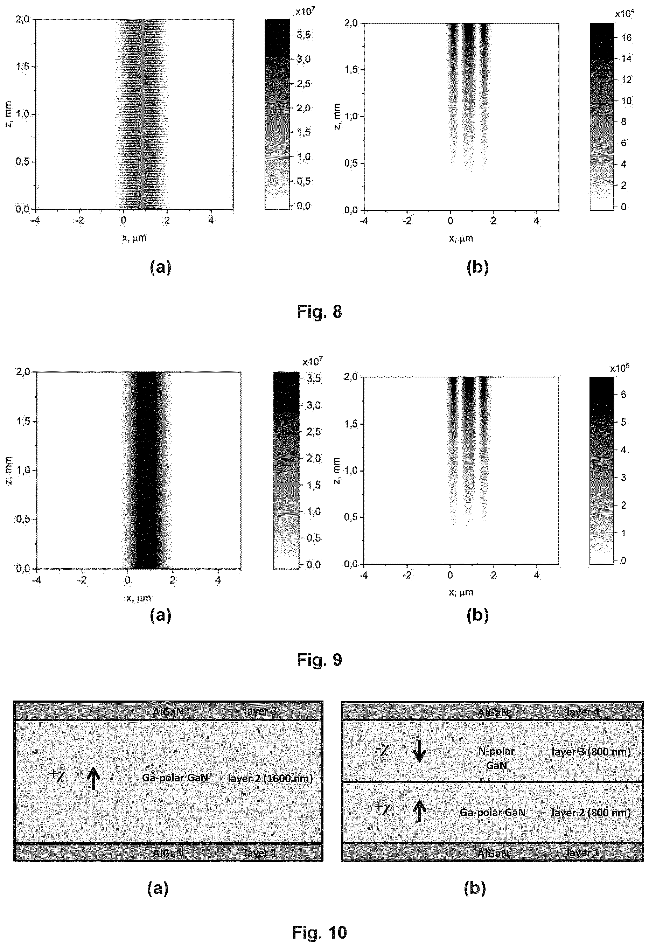

To illustrate the C-QPM condition (I), the intensity contour plots for pump and SH wave propagation in coupled waveguides are presented in Figures 8 and 9.

The obtained normalized conversion efficiencies $\eta_2$ for SH generated $TM_1^{2\omega}$ mode by the PIC-QPM method for different polarity inversion geometries (Figs. 6, 7, and 10) versus non-polarity inversion (NI) are presented in Table 2.

The comparison of the waveguide excitation methods revealed the superiority of $TM_1^{2\omega}$ supermode against the WG mode excitation, demonstrating higher normalized efficiency. An increase in the normalized efficiency with the number of polarity inversion layers in the waveguide, which enables the enhancement of the overlap integral between the fundamental and the SH mode, is confirmed. This trend remains independent not only of the type of the supermodes (symmetric or antisymmetric) and wavelength of excitation but also of the PM conditions ((I)-(VI)) for the given structure depicted in Fig. 1 as a general case and structures with single or double polarity inversions presented in Figs. 6, 7, and 10. The normalized efficiency follows the increase of the overlap integral and reveals an order of magnitude higher values for the symmetric supermode excitation against the antisymmetric, as indicated in Table 2. The highest value of the normalized efficiency equal to 119 %/(W*cm²) is obtained for the symmetric supermode excitation at 1308 nm wavelength in the structure with double polarity inversion (11) (the maximum number in this invention) shown in Fig. 6a. However, lowering the polarity inversion number to a single (12) one leads to overlap integral five times lower and reduces the normalized efficiency to 22.3 %/(W*cm²).

An enlarged overlap integral is possible to achieve with the excitation of higher-order supermodes, namely, $TM_2^{2\omega}$, $TM_3^{2\omega}$, etc. However, the higher the order of the supermode, the higher the complexity of the waveguides structure. For example, to excite the $TM_2^{2\omega}$ supermode the structure containing three polarity inverted layers in each coupled waveguide is needed that complicates the technology of its fabrication. However, a normalized efficiency up to 158 %/(W*cm²) can be achieved for the PM condition (III) (Table 3).

In Table 3 the comparison of SH generation normalized efficiency in different waveguides composed of nitride-based materials in the near IR range demonstrates the advantage of described directional coupler against the other apparatus, though at different phase-matching conditions.

Table 2. The conversion efficiencies for excitation of SH $TM_1^{2\omega}$ mode by PIC-QPM method.

| Pump wavel ength [nm] | SH wavel ength [nm] | PM con dition | Excitation method | Inversion type | Overlap integral [mm⁻¹] | Normalized efficiency [%/(W*cm²)] |
|---|---|---|---|---|---|---|
| Two waveguides | | | | | | |
| 1308 | 654 | (III) | s supermode[1] | I1[4] | 336 | 119 |
| | | | | I2[5] | 66,3 | 22,3 |
| | | | | NI[6] | 5,86·10⁻⁶ | 0,00029 |
| | | | WG mode[2] | I1[4] | 185 | 56,0 |
| | | | | I2[5] | - | 10,5 |
| | | | | NI[6] | - | 0,00021 |
| 1448,5 | 724,25 | (II) | WG mode[2] | I1[4] | 191 | 57,1 |
| | | | | I2[5] | - | 0,077 |
| | | | | NI[6] | - | 0,22 |
| 1510 | 755 | (I) | s supermode[1] | I1[4] | 249 | 72,8 |
| | | | | I2[5] | 0,62 | 0,076 |
| | | | | NI[6] | 12,4 | 2,6 |
| | | | WG mode[2] | I1[4] | 155 | 39,7 |
| | | | | I2[5] | - | 0,04 |
| | | | | NI[6] | - | 1,4 |
| 1749 | 874,5 | (IV) | as supermode[3] | I1a[7] | 33,9 | 9,3 |
| | | | | I2[5] | 2,59 | 0,86 |
| | | | | NI[6] | 3,09·10⁻⁶ | 0,00028 |
| | | | WG mode[2] | I1[4] | 5,68 | 1,1 |
| | | | | I2[5] | - | 0,038 |
| | | | | NI[6] | - | 0,0002 |
| One waveguide | | | | | | |
| 2410 | 1205 | | WG mode[2] | I0[8] | 281 | 27,8 |
| | | | | NI1[9] | 1,06*10⁻⁶ | 0,00067 |

[1] - pump beams $TM_0^\omega$ with the same phases are injected into both waveguides. Symmetric supermodes are generated;
[2] - pump beam $TM_0^\omega$ is injected into one of the waveguides. Symmetric and antisymmetric supermodes are generated;
[3] -pump beams $TM_0^\omega$ with opposites phases are injected into both of the waveguides. Antisymmetric supermodes are generated.
[4] - double polarity inversion; [5] - single polarity inversion; [6] - no polarity inversion;
[7] one of the waveguides with polarity inversion another without it; [8] - single waveguide with polarity inversion; [9] - single waveguide without polarity inversion.

Table 3. Comparisons of SH normalized efficiency in different waveguides from nitride-based materials.

| Ref. | Waveguide structure and conditions for SH generation | Pump wavelength [nm] | SH normalized efficiency [%/(W*cm²)] |
|---|---|---|---|
| [13], Blanc | AlN planar waveguide, MPM | 1057.6 | 0.0064 |

(continued)

| Ref. | Waveguide structure and conditions for SH generation | Pump wavelength [nm] | SH normalized efficiency [%/(W*cm$^2$)] |
|---|---|---|---|
| [14], Nitiss | Si$_3$N$_4$ ridge waveguide, QPM, all-optically poled | 1550 | 0.019 |
| [2], Gromovyi | GaN planar waveguide, MPM | 1260 | 0.15 |
| [15], Chowdhury | PO-GaN planar waveguide, QPM | 1658.6 | 12.76 |
| This invention | GaN planar waveguide, $TM_1^{2\omega}$ SH mode, PIC-QPM | 1308 | 119 |
| This invention | GaN planar waveguide, $TM_2^{2\omega}$ SH mode, PIC-QPM | 1070 | 158 |

LIST OF NON-PATENT CITATIONS

1. S. R. Bowman et al.: Optical dispersion and phase matching in gallium nitride and aluminum nitride, Opt. Mater. Express, vol. 8, pp. 1091-1099, 2018.
2. M. Gromovyi et al.: Efficient second harmonic generation in low-loss planar GaN waveguides, Opt. Express, vol. 25, pp. 23035-23044, 2017.
3. P. Dong, A. G. Kirk: Nonlinear frequency conversion in waveguide directional couplers, Phys. Rev. Lett., vol. 93, pp. 133901-133905, 2004.
4. I. Biaggio, et al.: Coupling-length phase matching for nonlinear optical frequency conversion in parallel waveguides, Phys. Rev. A, vol. 90, pp. 043816-1-11, 2014.
5. T. Grinys, et al.: GaN growth on Si with rare-earth oxide distributed Bragg reflector structures, J. Cryst. Growth, vol. 424, pp. 28-32, 2015.
6. J. Mickevicius, et al.: Temperature-dependent efficiency droop in AlGaN epitaxial layers and quantum wells, AIP Adv., vol. 6, pp. 045212-1-5, 2016.
7. X. G. Huang, M. R. Wang: A novel quasi-phase-matching frequency doubling technique, Opt. Commun., vol. 150, pp. 235-238, 1998.
8. P. Dong, et al.: Observation of continuous-wave second-harmonic generation in semiconductor waveguide directional couplers, Opt. Express, vol. 14, pp. 2256-2262, 2006.
9. G.-X. Wu, et al.: Quasi-phase-matching method based on coupling compensation for surface second-harmonic generation in optical fiber nanowire coupler, ACS Photonics, vol. 5, pp. 3916-3922, 2018.
10. A. A. Maier: Coupled modes phase matching and synchronous non-linear wave interaction in coupled waveguides, Kvantovaya Elektronika, vol. 7, pp. 1596-1598, 1980.
11. R. Petruskevicius, et al.: Nonlinear PML Boundary Conditions for Nonparaxial BPM in $\chi(2)$ Materials, IEEE Photon. Technol. Lett., vol.10, pp. 1434-1436, 1998.
12. D. Kezys, et al.: Influence of parametric diffraction on conversion efficiency in two-beam-pumped optical parametric amplifier, Opt. Commun., vol. 324, pp. 58-62, 2014.
13. D. Blanc, et al.: Phase-matched frequency doubling in an aluminum nitride waveguide with a tunable laser source, Appl. Phys. Lett., vol. 66, pp. 659-661, 1995.
14. E. Nitiss, et al.: Formation rules and dynamics of photoinduced X(2) gratings in silicon nitride waveguides, ACS Photonics, vol. 7, pp. 147-153, 2020.
15. A. Chowdhury, et al.: Second-harmonic generation in periodically poled GaN, Appl. Phys. Lett., vol. 83, pp. 1077-1079, 2003.

Claims

1. An efficient optical frequency converter, for second harmonic (SH) generation from a fundamental pump optical wave with frequency $\omega$, comprising:

• a directional coupler composed of two strongly coupled waveguides, a separating layer between them, and upper and lower cladding layers, wherein the medium of the waveguides has second order of nonlinear susceptibility,

◦ wherein the directional coupler is configured for Polarity Inverted waveguides and Coupling-compensated Quasi-Phase-Matching (PIC-QPM) of the fundamental pump and SH waves, where adjusted propagation constants of the pump supermodes with frequency $\omega$ and generated SH supermodes with frequency $2\omega$ lead to phase matching between them and results in constructively growth of the signals with propagation length,

**characterized in that**

• each of the both waveguides comprises at least two layers of the same medium, with opposite polarity, that increases the spatial overlap integral of the fields of the input supermodes with frequency $\omega$ and SH supermodes with frequency $2\omega$, that results in marked improvement of the SH generation effectiveness.

2. The converter according to claim 1, **characterized in that** said directional coupler is symmetric under the symmetric distribution of refractive indices of the directional coupler material.

3. The converter according to claims 1-2, **characterized in that** the waveguides of the directional coupler are formed of III-N semiconductors, such as GaN, AlGaN, or AlN.

4. The converter according to claims 1-3, **characterized in that** each of both waveguides comprises at least two III-N layers faced by opposite polarities, with their metal- and N- faces.

5. The converter according to claims 1-4, **characterized in that** the waveguides are separated by a separation layer of AlGaN, AlN, or $Al_2O_3$, wherein the thickness of said separation layer is adjusted according to the SH generation function of the converter.

6. The converter according to claims 1-5, **characterized in that** the upper and lower cladding layers are composed of a material with a refraction index lower than the refraction index of the waveguides, such as AlGaN, AlN, or $Al_2O_3$.

7. The converter according to claims 1-6, **characterized in that** each waveguide is a planar waveguide.

8. A method to generate SH modes by using the converter according to claims 1 to 7, **characterized in that** the input of the pump optical wave with frequency $\omega$ pumped in one of the waveguides excites symmetric and antisymmetric supermodes of a wave with frequency $\omega$ with different propagation constants in the directional coupler, wherein said modes interfere with one another causing the oscillation of pump optical intensity between the two waveguides and generating supermodes with SH frequency $2\omega$ in the directional coupler.

9. The method according to claim 8, **characterized in that** the input of the $TM_0^{\omega}$ mode with frequency $\omega$ pumped into one of the waveguides causes the generation of the $TM_1^{2\omega}$, $TM_2^{2\omega}$, and higher number supermodes with second harmonic frequency $2\omega$.

10. The method according to claim 8, **characterized in that** the $TM_0^{\omega}$ and $TE_0^{\omega}$ modes with frequency $\omega$ pumped into one of the waveguides cause the generation of the $TM_1^{2\omega}$, $TM_2^{2\omega}$, and higher number supermodes of the wave with second harmonic frequency $2\omega$.

11. A method to generate SH modes by using the converter according to claims 1 to 7, **characterized in that** the input of the pump optical wave with frequency $\omega$ pumped in the both of the waveguides with the same or opposite phases excites symmetric or antisymmetric supermodes, respectively, with frequency $\omega$ with modified propagation constants and generating supermodes with SH frequency $2\omega$ in the directional coupler.

12. The method according to claim 11, **characterized in that** the input of the $TM_0^{\omega}$ mode with frequency $\omega$ pumped into both waveguides improves the generation effectivity of the $TM_1^{2\omega}$, $TM_2^{2\omega}$, and higher number supermodes with second harmonic frequency $2\omega$.

13. The method according to claim 11, **characterized in that** the input of $TM_0^{\omega}$ and $TE_0^{\omega}$ mode with frequency $\omega$ pumped into both waveguides improves the generation effectivity of the $TM_1^{2\omega}$, $TM_2^{2\omega}$, and higher number supermodes with second harmonic frequency $2\omega$.

| AlGaN | layer 5 | |
| GaN | layer 4 | Waveguide A |
| AlGaN | layer 3 | |
| GaN | layer 2 | Waveguide B |
| AlGaN | layer 1 | |

**Fig. 1**

**Fig. 2**

**(a)**

**(b)**

**Fig. 3**

Fig. 4

(a)

(b)

(c)

Fig. 5

| | | AlGaN | layer 7 |
|---|---|---|---|
| $+\chi$ | ↑ | Ga-polar GaN | layer 6 (365 nm) |
| $-\chi$ | ↓ | N-polar GaN | layer 5 (435 nm) |
| | | AlGaN | layer 4 (100 nm) |
| $+\chi$ | ↑ | Ga-polar GaN | layer 3 (446 nm) |
| $-\chi$ | ↓ | N-polar GaN | layer 2 (354 nm) |
| | | AlGaN | layer 1 |

a)

| | | AlGaN | layer 7 |
|---|---|---|---|
| $-\chi$ | ↓ | N-polar GaN | layer 6 (344 nm) |
| $+\chi$ | ↑ | Ga-polar GaN | layer 5 (456 nm) |
| | | AlGaN | layer 4 (100 nm) |
| $+\chi$ | ↑ | Ga-polar GaN | layer 3 (453 nm) |
| $-\chi$ | ↓ | N-polar GaN | layer 2 (347 nm) |
| | | AlGaN | layer 1 |

b)

| | | AlGaN | layer 7 |
|---|---|---|---|
| $+\chi$ | ↑ | Ga-polar GaN | layer 6 (456 nm) |
| $-\chi$ | ↓ | N-polar GaN | layer 5 (344 nm) |
| | | AlGaN | layer 4 (100 nm) |
| $-\chi$ | ↑ | N-polar GaN | layer 3 (338 nm) |
| $+\chi$ | ↓ | Ga-polar GaN | layer 2 (462 nm) |
| | | AlGaN | layer 1 |

c)

| | | AlGaN | layer 6 |
|---|---|---|---|
| $+\chi$ | ↑ | Ga-polar GaN | layer 5 (800 nm) |
| | | AlGaN | layer 4 (100 nm) |
| $+\chi$ | ↑ | Ga-polar GaN | layer 3 (487 nm) |
| $-\chi$ | ↓ | N-polar GaN | layer 2 (313 nm) |
| | | AlGaN | layer 1 |

d)

Fig. 6

| | | AlGaN | layer 7 |
|---|---|---|---|
| $+\chi$ | ↑ | Ga-polar GaN | layer 6 (317 nm) |
| $-\chi$ | ↓ | N-polar GaN | layer 5 (483 nm) |
| | | AlGaN | layer 4 (100 nm) |
| $+\chi$ | ↑ | Ga-polar GaN | layer 3 (487 nm) |
| $-\chi$ | ↓ | N-polar GaN | layer 2 (313 nm) |
| | | AlGaN | layer 1 |

(a)

| | | AlGaN | layer 5 |
|---|---|---|---|
| $-\chi$ | ↓ | N-polar GaN | layer 4 (800 nm) |
| | | AlGaN | layer 3 (100 nm) |
| $+\chi$ | ↑ | Ga-polar GaN | layer 2 (800 nm) |
| | | AlGaN | layer 1 |

(b)

| | | AlGaN | layer 5 |
|---|---|---|---|
| $+\chi$ | ↑ | Ga-polar GaN | layer 4 (800 nm) |
| | | AlGaN | layer 3 (100 nm) |
| $+\chi$ | ↑ | Ga-polar GaN | layer 2 (800 nm) |
| | | AlGaN | layer 1 |

(c)

Fig. 7

14

**Fig. 8**

**Fig. 9**

**Fig. 10**

Europäisches
Patentamt

European
Patent Office

Office européen
des brevets

# EUROPEAN SEARCH REPORT

Application Number

EP 22 18 2212

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KOLENDA M ET AL: "Development of polarity inversion in a GaN waveguide structure for modal phase matching", JOURNAL OF MATERIAL SCIENCE, KLUWER ACADEMIC PUBLISHERS, DORDRECHT, vol. 55, no. 26, 8 June 2020 (2020-06-08), pages 12008-12021, XP037161348, ISSN: 0022-2461, DOI: 10.1007/S10853-020-04831-Z [retrieved on 2020-06-08] | 1-7 | INV. G02F1/35 |
| Y | * the whole document * | 8,9,11, 12 | |
| A | | 10,13 | |
| | ----- | | |
| Y,D | WO 2005/083505 A1 (UNIV MCGILL [CA]; DONG PO [CA]) 9 September 2005 (2005-09-09) * abstract; figures 8b,8c * * page 19, line 16 - page 21, line 31 * | 8,9,11, 12 | |
| | ----- | | |
| A | Communication Rapid: "Japanese Journal of Applied Physics", , 13 May 2022 (2022-05-13), pages 1-7, XP093005385, Retrieved from the Internet: URL:https://iopscience.iop.org/article/10.35848/1347-4065/ac57ab/pdf [retrieved on 2022-12-06] * the whole document * | 1-13 | TECHNICAL FIELDS SEARCHED (IPC)<br><br>G02F |
| | ----- | | |
| A | SPIE, PO BOX 10 BELLINGHAM WA 98227-0010 USA, 20 September 2004 (2004-09-20), XP040197524, * the whole document * | 1-13 | |
| | ----- | | |

The present search report has been drawn up for all claims

| Place of search | Date of completion of the search | Examiner |
|---|---|---|
| The Hague | 7 December 2022 | Beugin, Anne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 18 2212

This annex lists the patent family members relating to the patent documents cited in the above-mentioned European search report.
The members are as contained in the European Patent Office EDP file on
The European Patent Office is in no way liable for these particulars which are merely given for the purpose of information.

07-12-2022

| Patent document cited in search report | | Publication date | Patent family member(s) | | Publication date |
|---|---|---|---|---|---|
| WO 2005083505 | A1 | 09-09-2005 | TW 200533972 | A | 16-10-2005 |
| | | | WO 2005083505 | A1 | 09-09-2005 |

For more details about this annex : see Official Journal of the European Patent Office, No. 12/82

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2005083505 A1
- JP 2019073402 A
- US 20120068189 A
- US 9396941 B2

### Non-patent literature cited in the description

- **S. R. BOWMAN et al.** Optical dispersion and phase matching in gallium nitride and aluminum nitride. *Opt. Mater. Express,* 2018, vol. 8, 1091-1099
- **M. GROMOVYI et al.** Efficient second harmonic generation in low-loss planar GaN waveguides. *Opt. Express,* 2017, vol. 25, 23035-23044
- **P. DONG ; A. G. KIRK.** Nonlinear frequency conversion in waveguide directional couplers. *Phys. Rev. Lett.,* 2004, vol. 93, 133901-133905
- **I. BIAGGIO et al.** Coupling-length phase matching for nonlinear optical frequency conversion in parallel waveguides. *Phys. Rev. A,* 2014, vol. 90, 043816-1, 11
- **T. GRINYS et al.** GaN growth on Si with rare-earth oxide distributed Bragg reflector structures. *J. Cryst. Growth,* 2015, vol. 424, 28-32
- **J. MICKEVIČIUS et al.** Temperature-dependent efficiency droop in AlGaN epitaxial layers and quantum wells. *AIP Adv.,* 2016, vol. 6, 045212-1, 5
- **X. G. HUANG ; M. R. WANG.** A novel quasi-phase-matching frequency doubling technique. *Opt. Commun.,* 1998, vol. 150, 235-238
- **P. DONG et al.** Observation of continuous-wave second-harmonic generation in semiconductor waveguide directional couplers. *Opt. Express,* 2006, vol. 14, 2256-2262
- **G.-X. WU et al.** Quasi-phase-matching method based on coupling compensation for surface second-harmonic generation in optical fiber nanowire coupler. *ACS Photonics,* 2018, vol. 5, 3916-3922
- **A. A. MAIER.** Coupled modes phase matching and synchronous non-linear wave interaction in coupled waveguides. *Kvantovaya Elektronika,* 1980, vol. 7, 1596-1598
- **R. PETRUSKEVICIUS et al.** Nonlinear PML Boundary Conditions for Nonparaxial BPM in $\chi(2)$ Materials. *IEEE Photon. Technol. Lett.,* 1998, vol. 10, 1434-1436
- **D. KEZYS et al.** Influence of parametric diffraction on conversion efficiency in two-beam-pumped optical parametric amplifier. *Opt. Commun.,* 2014, vol. 324, 58-62
- **D. BLANC et al.** Phase-matched frequency doubling in an aluminum nitride waveguide with a tunable laser source. *Appl. Phys. Lett.,* 1995, vol. 66, 659-661
- **E. NITISS et al.** Formation rules and dynamics of photoinduced (2) gratings in silicon nitride waveguides. *ACS Photonics,* 2020, vol. 7, 147-153
- **A. CHOWDHURY et al.** Second-harmonic generation in periodically poled GaN. *Appl. Phys. Lett.,* 2003, vol. 83, 1077-1079